Europäisches Patentamt

European Patent Office

Office européen des brevets

(11) Numéro de publication : **0 344 041 B1**

(12) **FASCICULE DE BREVET EUROPEEN**

(45) Date de publication du fascicule du brevet :
**09.12.92 Bulletin 92/50**

(51) Int. Cl.⁵ : **G21C 15/18**

(21) Numéro de dépôt : **89401320.0**

(22) Date de dépôt : **11.05.89**

(54) **Réacteur nucléaire à dispositif d'injection d'eau de refroidissement de secours.**

(30) Priorité : **13.05.88 FR 8806475**

(43) Date de publication de la demande :
**29.11.89 Bulletin 89/48**

(45) Mention de la délivrance du brevet :
**09.12.92 Bulletin 92/50**

(84) Etats contractants désignés :
**BE CH DE ES GB LI**

(56) Documents cités :
**EP-A- 0 029 372
DE-A- 2 705 010
FR-A- 2 186 710
FR-A- 2 341 919
US-A- 4 082 608**

(73) Titulaire : **FRAMATOME
Tour Fiat 1, Place de la Coupole
F-92400 Courbevoie (FR)**

(72) Inventeur : **Cheverau, Gérard
84 Avenue Thiers
F-93340 Le Raincy (FR)**
Inventeur : **Cauquelin, Claude
3 Rue Guillaume Appolinaire
F-78640 Neauphle le Château (FR)**
Inventeur : **Falduti, Claude
66 Rue de Lierre
F-91240 St Michel sur Orge (FR)**

(74) Mandataire : **Fort, Jacques et al
CABINET PLASSERAUD 84, rue d'Amsterdam
F-75009 Paris (FR)**

EP 0 344 041 B1

Jouve, 18, rue Saint-Denis, 75001 PARIS

## Description

La présente invention concerne les réacteurs nucléaires à eau sous pression munis d'un dispositif d'injection d'eau permettant d'amener dans la cuve un débit d'eau de secours stocké dans un réservoir externe pour compenser temporairement l'échappement d'eau en cas de rupture d'une tuyauterie du circuit primaire.

On connaît depuis très longtemps des réacteurs munis de dispositifs de ce genre (FR-A-1 597 057). Un de leurs défauts est que l'injection d'eau de secours, stockée à la température atmosphérique dans un réservoir externe, lorsqu'elle pénètre dans la cuve du réacteur à température élevée de fonctionnement, provoque un choc thermique qui est particulièrement dangereux sur la partie de la paroi latérale de la cuve située au niveau du coeur car le niveau élevé d'irradiation subie par cette partie risque d'abaisser ses caractéristiques mécaniques. Or, il est indispensable que, en cas de rupture du circuit primaire et d'injection de secours, la cuve résiste encore à la pression résiduelle interne. Dans les réacteurs actuels, on a tenté de résoudre le problème en injectant l'eau en un ou plusieurs endroits du circuit aussi éloignés que possible de la cuve, de façon que l'eau froide injectée se mélange avec l'eau chaude encore présente dans le circuit avant d'arriver au contact de la paroi latérale de la cuve.

On a également proposé (FR-A-2 341 919) un réacteur nucléaire à eau sous pression du type comprenant une cuve fermée par un couvercle, munie de tubulures d'entrée et de sortie d'eau de refroidissement, qui est raccordée à au moins une conduite d'injection d'eau sous pression provenant d'un réservoir de secours, débouchant dans la cuve à un niveau au moins égal à celui de toutes les tubulures ; des équipements internes suspendus à la cuve, ayant une plaque support de coeur et ménageant avec la paroi latérale de la cuve un passage annulaire d'écoulement descendant d'eau depuis la tubulure ou chaque tubulure d'entrée jusqu'à un espace de distribution situé en dessous de la plaque support de coeur ; et une canalisation prolongeant la conduite vers le bas. Cette canalisation est à l'intérieur du cloisonnement des équipements internes.

Dans ce réacteur, la fonction d'injection de la conduite est secondaire : le rôle principal qui lui est affecté est de permettre de ré-introduire l'eau fournie par un circuit de recirculation d'eau raccordé à la tubulure de sortie. L'utilisation de la canalisation pour l'injection de secours découle simplement de l'idée naturelle que, cette canalisation ne jouant un rôle que lors du fonctionnement normal du réacteur, elle est disponible pour l'injection de secours en cas d'accident. Mais, du fait que la canalisation débouche au dessus de la plaque support de coeur, l'eau arrive sur les assemblages combustibles sans s'être sensiblement réchauffée, d'où un risque d'endommagement des assemblages de combustible et notamment de rupture de gaines de crayons.

On a par ailleurs proposé un réacteur nucléaire comportant des conduites de traversée de la cuve affectées uniquement à l'injection d'eau de refroidissement de secours, dont le débouché dans la cuve est muni de déflecteurs dirigeant le jet d'eau introduit vers le fond de la cuve (FR-A-2 286 478). Cette solution ne résout en rien le problème du choc thermique sur la paroi latérale de la cuve. Bien au contraire elle risque de l'aggraver car les déflecteurs dirigent le courant d'eau froide le long de la cuve, directement vers la partie la plus sensible de cette dernière.

La présente invention vise à fournir un réacteur nucléaire du type ci-dessus défini qui tout à la fois permette d'injecter directement l'eau de refroidissement de secours dans la cuve, en lui donnant en conséquence une efficacité maximale, et évite de provoquer un choc thermique sur des parties sensibles, telles que la paroi latérale de la cuve au niveau du coeur et les assemblages.

Dans ce but l'invention propose un réacteur dans lequel la canalisation est isolée thermiquement de la paroi latérale de la cuve, au moins au niveau du coeur, et débouche au dessous de la plaque support de coeur, c'est-à-dire dans l'espace de distribution occupé par un volume important d'eau, ce qui augmente rapidement la température de l'eau froide injectée.

Dans un mode particulier de réalisation, chaque canalisation est fixée de façon rigide à une enveloppe appartenant aux équipements internes et comporte des moyens d'appui sensiblement étanches contre le débouché de la conduite correspondante ; dans une variante, chaque canalisation est fixée à la paroi latérale de la cuve par des moyens qui la maintiennent à distance de cette dernière.

L'invention sera mieux comprise à la lecture de la description qui suit de modes particuliers de réalisation, donnés à titre d'exemples non limitatifs. La description se réfère aux dessins qui l'accompagnent, dans lesquels :

- la figure 1 montre très schématiquement un réacteur à eau sous pression suivant un premier mode de réalisation de l'invention, en coupe suivant la ligne I-I de la figure 2 ;
- la figure 2 est une coupe horizontale suivant la ligne II-II de la figure 1, montrant une répartition possible des tubulures et des conduites d'injection ;
- la figure 3 est une vue de détail à grande échelle montrant une conduite d'injection et la canalisation correspondante d'un réacteur constituant une variante de réalisation, en coupe suivant un plan vertical ;
- la figure 4, similaire à la figure 3, montre une variante de réalisation, en coupe suivant la ligne IV-IV de la figure 5 ;

- la figure 5 est une vue en coupe horizontale du réacteur de la figure 4, au niveau des tubulures.

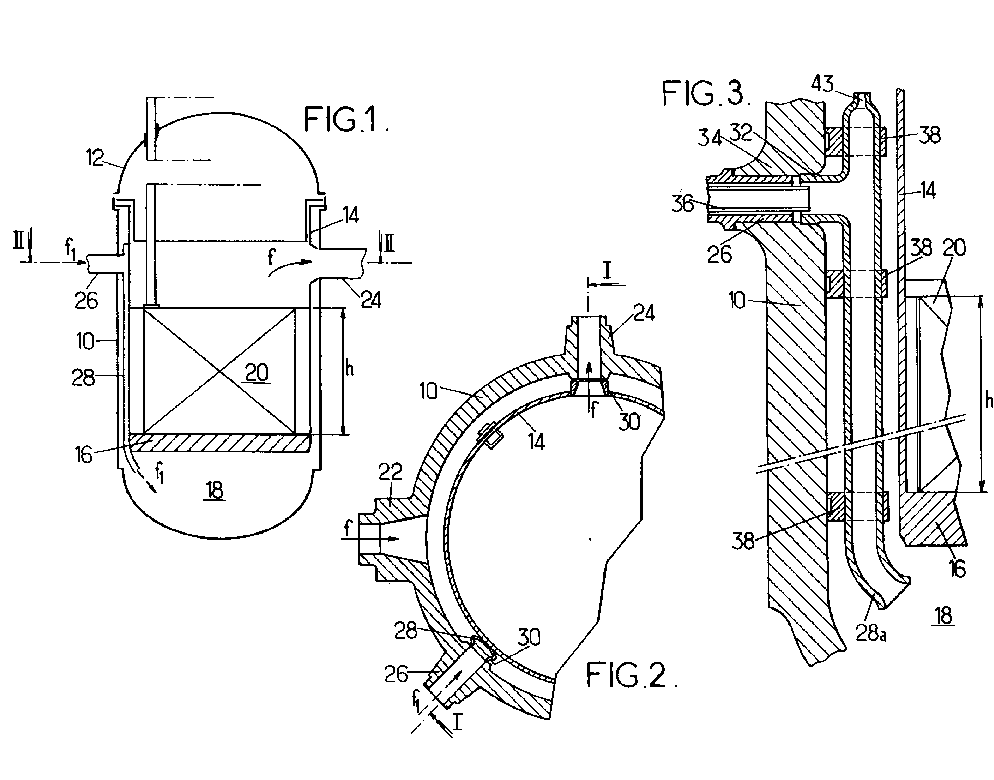

Le réacteur nucléaire à eau sous pression montré schématiquement en figure 1 a une constitution générale classique. Il comporte une cuve 10 de résistance à la pression fermée par un couvercle 12. Sur la bride de la cuve 10 repose un rebord d'une enveloppe 14 appartenant aux équipements internes du réacteur. A cette enveloppe 14 est fixée une plaque support de coeur 16 qui délimite, avec le fond de la cuve, un espace 18 de distribution. Le coeur 20 est constitué d'assemblages de combustible juxtaposés reposant sur la plaque 16 et occupant une hauteur h. La cuve est munie de tubulures 22 d'entrée et 24 de sortie de l'eau sous pression constituant le réfrigérant et le modérateur du réacteur, au nombre de quatre dans le cas illustré. Lors du fonctionnement normal, l'eau sous pression arrive par les tubulures d'entrée 22, descend vers l'espace de distribution 18 par le passage annulaire délimité par la paroi latérale de la cuve 10 et l'enveloppe 14, remonte par des ouvertures dans la plaque support de coeur 16 puis à travers le coeur 20 jusqu'à un collecteur, et s'échappe par les tubulures 24 suivant le trajet indiqué par les flèches f sur les figures 1 et 2.

Conformément à l'invention, le réacteur est muni de moyens d'injection d'eau sous pression de refroidissement de secours, comprenant au moins une conduite 26 alimentée par une installation de secours qui peut avoir l'une quelconque des constitutions habituelles et une canalisation 28 qui reçoit l'eau arrivant par la conduite 26 et l'amène au dessous de la plaque support de coeur 16. L'ensemble ainsi constitué permet à l'eau froide injectée en cas de rupture du circuit de refroissement primaire de se mélanger à l'eau chaude résiduelle occupant l'espace 18 et de refroidir ensuite le coeur dans lequel elle circule par convection naturelle, en passant par les ouvertures (non représentées) de la plaque support de coeur.

Le débouché des conduites 26 doit être au moins, dans le mode de réalisation représenté, au même niveau que celui des tubulures 22 et 24, ainsi qu'un casse-siphon, constitué par un orifice calibré 43 en partie haute des canalisations 28, afin de ne pas aggraver les risques de dénoyage du coeur 20 en cas de rupture de tuyauterie sur le circuit d'injection d'eau de secours. Ce dernier ne sera pas décrit, car il peut avoir l'une quelconque des constitutions connues, par exemple celle décrite dans le document FR-A-1 597 057 déjà mentionné. Le réacteur représenté en figure 2 comprend deux canalisations 28, placées chacune à mi-distance entre une tubulure d'entrée 22 et une tubulure de sortie 24. Les canalisations peuvent avoir une section circulaire, trapézoïdale ou autre au lieu de la section elliptique représentée.

Chaque canalisation 28 est fixée sur l'enveloppe de coeur 14 à intervalles suffisamment courts pour que les canalisations ne soient pas arrachées ou déformées par les turbulences créées par l'écoulement en régime normal ou lors d'injection d'eau de secours. Du fait que les canalisations 28 sont fixées à l'enveloppe de coeur 14, elles sont extraites en même temps que les internes inférieurs, ce qui laisse un libre accès à l'ensemble de la surface interne de la cuve pour les inspections périodiques nécessaires entre cycles de fonctionnement du réacteur. Un intervalle radial est ménagé entre chaque canalisation 28 et la paroi de la cuve. L'espace séparant la canalisation de la cuve constitue ainsi un matelas isolant protégeant la cuve contre le choc thermique que provoquerait l'injection d'eau froide en cas de contact continu direct avec la cuve. L'isolement dû à la lame d'eau (ou éventuellement de vapeur en cas d'incident) de plusieurs centimètres d'épaisseur à température intermédiaire suffit à protéger la cuve sur la hauteur critique h.

De plus la canalisation 18 assure elle-même un isolement du fait qu'elle sera constituée généralement en acier inoxydable austénitique dont la conductivité thermique est inférieure à celle de l'acier de la cuve.

La liaison entre le débouché de chaque conduite 26 et la canalisation 28 correspondante peut être réalisée par des moyens similaires à ceux utilisés pour réaliser une liaison à peu près étanche entre les tubulures de sortie 24 et les ouvertures de sortie de l'eau à travers l'enveloppe 14 : l'enveloppe est munie de manchons 30 placés en face des ajutages 24 et des conduites 26. Lorsque le réacteur est froid, un jeu radial subsiste entre le manchon 30 et la cuve. Lorsque le réacteur atteint sa température de fonctionnement, les différences de coefficient de dilatation thermique entre le métal constituant la cuve et celui constituant l'enveloppe amènent le manchon 30 au contact. L'étanchéité peut n'être pas absolue par suite des tolérances de fabrication. Mais la fraction du débit injecté qui pourra s'échapper par le jeu restera toujours faible, insuffisante pour provoquer un choc froid sur la cuve.

Dans la variante de réalisation de l'invention montrée en figure 3, les canalisations 28a sont fixées sur la paroi latérale de la cuve au lieu d'être fixées sur l'enveloppe 14. Cette disposition a l'avantage de permettre de fournir davantage de place que dans le cas des figures 1 et 2 et de réduire les fuites. L'étanchéité peut en effet être réalisée par emmanchement d'un raccord 32, solidaire de la canalisation 28, dans la tubulure 34 qui reçoit la conduite 20. Une manchette de protection thermique 36 peut être prévue pour limiter le gradient thermique à la traversée de la cuve. Une manchette similaire peut être prévue dans le mode de réalisation montré en figures 1 et 2.

Pour isoler thermiquement chaque canalisation 28a de la paroi de la cuve 10 sur la hauteur h, les supports 38 sont placés le plus possible en dehors de cette zone. L'étendue de la surface de contact entre les supports 38 et la cuve est aussi réduite que possible alors qu'au contraire la surface de contact entre les supports et le fluide qui les entoure (eau ou vapeur) est aussi élevée que possible. Pour permettre l'inspection complète de la cuve, il est préférable de fixer les supports à la cuve par des organes démontables à distance.

Dans certains réacteurs, il est nécessaire de protéger les portions de la cuve qui sont les plus proches du coeur par des écrans d'absorption des neutrons dits "écrans thermiques". La figure 5 montre par exemple un réacteur dans lequel, du fait de la forme polygonale du coeur, quatre régions de la cuve 10 sont particulièrement exposées au flux neutronique. Dans ces quatre régions, des écrans thermiques 40, constitués généralement par des plaques d'acier, sont disposés contre l'enveloppe de coeur 14, séparée du coeur proprement dit par un cloisonnement non représenté.

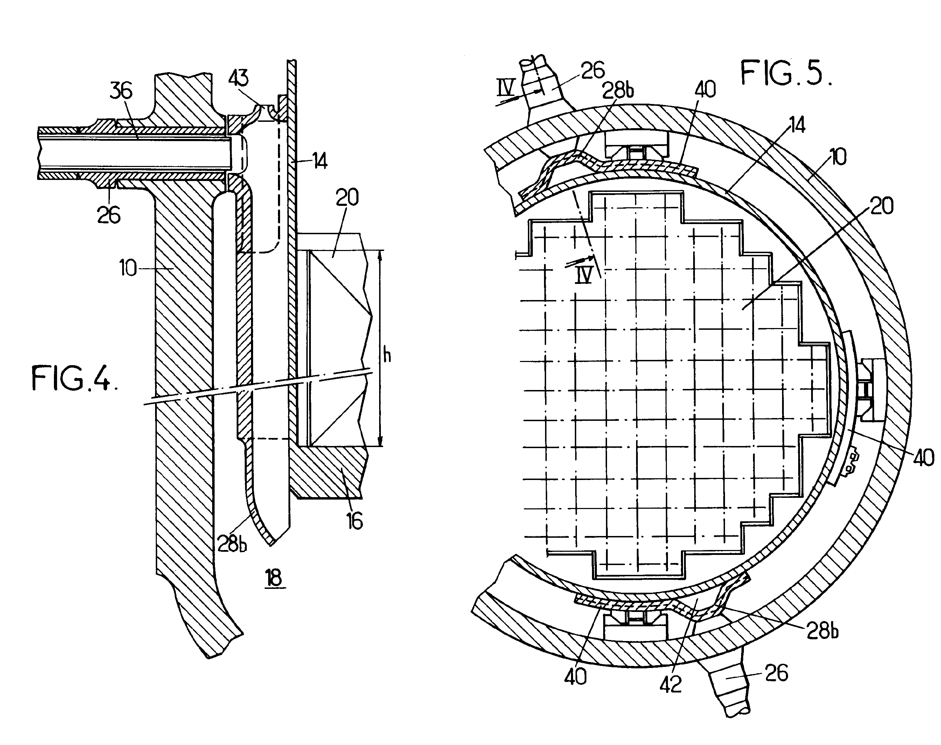

Dans un tel réacteur, les canalisations 28b d'injection d'eau de secours sont avantageusement intégrées à certains des écrans thermiques 40. Pour cela, la forme d'un ou plusieurs écrans 40 est localement modifiée de façon à ménager un espace d'injection d'eau 42 entre eux et l'enveloppe 14. Cela conduit à prolonger les écrans vers le haut et vers le bas, au moins sur une partie de leur développement angulaire. Comme le montre la figure 4, les écrans peuvent avoir une épaisseur plus faible là où ils constituent simplement canalisation d'injection 28b que là où ils remplissent également une fonction de protection neutronique, sur la hauteur h.

L'invention est susceptible de nombreuses autres variantes encore de réalisation. Même lorsqu'aucun écran thermique n'est nécessaire, les canalisations peuvent être constituées par une tôle pliée en forme de U à branches divergentes ou d'oméga comme sur les figures 4 et 5. La partie inférieure des canalisations peut présenter une forme dispersant le jet d'eau froide injecté, par exemple en queue de carpe. Il doit être entendu que de telles variantes, ainsi plus généralement que toutes autres restant dans le cadre des équivalences, sont couvertes par le présent brevet.

**Revendications**

1. Réacteur nucléaire à eau sous pression comprenant : une cuve (10) fermée par un couvercle (12), munie de tubulures d'entrée (22) et de sortie (24) d'eau de refroidissement et raccordée à au moins une conduite (26) permettant l'injection d'eau sous pression, provenant d'un réservoir de secours, débouchant dans la cuve à un niveau au moins égal à celui des tubulures ; des équipements internes suspendus à la cuve, ayant une plaque (16) support de coeur (20) et ménageant avec la paroi latérale de la cuve (10) un passage annulaire d'écoulement descendant d'eau depuis la tubulure ou chaque tubulure d'entrée jusqu'à un espace de distribution (18) situé en dessous de la plaque support de coeur (16) ; et une canalisation (28,28a) prolongeant la conduite ou chaque conduite (26) vers le bas,

caractérisé en ce que la canalisation ou chaque canalisation (28,28a) est placée entre une enveloppe (14) appartenant aux équipements internes et la paroi latérale de la cuve (10), à distance de cette dernière, isolée thermiquement de la paroi latérale de la cuve (10), au moins au niveau du coeur (20), et débouche, au dessous de la plaque support de coeur (16), dans l'espace de distribution (18), la canalisation étant continue de la conduite d'injection jusqu'à l'espace de distribution.

2. Réacteur selon la revendication 1, caractérisé en ce que chaque canalisation (28) est fixée de façon rigide à l'enveloppe (14) et comporte des moyens d'appui sensiblement étanche contre le débouché de la conduite (26) correspondante.

3. Réacteur selon la revendication 1, caractérisé en ce que chaque canalisation est fixée à la paroi latérale de la cuve, par des moyens qui la maintiennent à distance de cette dernière, et en ce qu'elle comporte un tronçon de raccordement (32) engagé dans une tubulure d'entrée de la conduite (26) correspondante.

4. Réacteur selon la revendication 3, caractérisé en ce que chaque canalisation est fixée à la cuve par des supports (38) situés à un niveau différent de celui du coeur (20).

5. Réacteur selon l'une quelconque des revendications précédentes, caractérisé en ce que chaque conduite (26) est munie d'une manchette (36) de protection thermique, dans la partie où elle traverse la paroi latérale de la cuve (10).

**Patentansprüche**

1. Druckwasser-Kernreaktor mit:
einem durch einen Deckel (12) abgeschlossenen Reaktorbehälter (10) versehen mit Eingangsrohrleitungen (22) und Ausgangsrohrleitungen (24) für das Kühlwasser, die mindestens an eine Leitung (26) angeschlossen sind, die das Einspritzen von Druckwasser erlaubt, wobei die Leitung von einem Reservebehälter ausgeht und in dem Behälter auf einer Höhe mündet, die wenigstens auf der Höhe der Rohrleitungen liegt, wobei innere Einrichtungen, die am Reaktorbehälter eingehängt sind, eine Trägerplatte (16) für den Reaktorkern (20) aufweisen und mit der Seitenwand des Behälters (10) eine Ringpassage zum absteigenden Durchfluß des Wassers ausgehend von der Rohrleitung und jeder Eingangsrohrleitung bis zu einem Verteilerraum (18) gebildet wird, der unterhalb der Trägerplatte des Kerns (16) gelegen ist und mit einem Leitungssystem (28, 28a), das die Leitung oder jede Leitung (26) nach unten verlängert,

dadurch **gekennzeichnet, daß**

das Leitungssystem bzw. jedes Leitungssystem (28, 28a) zwischen einer Hülle (14), die zu den inneren Ausrüstungen gehört und der Seitenwand des Behälters (10) mit Abstand zu letzterer und thermisch gegenüber der Seitenwand des Behälters (10) isoliert mindestens auf der Höhe des Kerns (20) angeordnet ist und unterhalb der Trägerplatte des Kerns (16) im Verteilungsraum (18) des Leitungssystems mündet, das die Einspritzleitung bis zum Verteilungsraum verlängert.

2. Reaktor nach Anspruch 1,
dadurch gekennzeichnet, daß
jedes Leitungssystem (28) fest an der Hülle (14) befestigt ist und Auflageorgane aufweist, die im wesentlichen dicht gegenüber dem Ausfluß der entsprechenden Leitung (26) sind.

3. Reaktor nach Anspruch 1,
dadurch gekennzeichnet, daß
jedes Leitungssystem an der Seitenwandung des Behälters mit Organen befestigt ist, die es zu letzteren mit Abstand haltern und dadurch, daß das Leitungssystem einen Verbindungsabschnitt (32) aufweist, der in ein Eingangsrohr der entsprechenden Leitung (26) eingreift.

4. Reaktor nach Anspruch 3,
dadurch gekennzeichnet, daß
jedes Leitungssystem über Träger (38) am Behälter befestigt ist, die auf einer anderen Höhe als der des Reaktorkerns (20) angeordnet sind.

5. Reaktor nach einem der vorstehenden Ansprüche,
dadurch gekennzeichnet, daß
jede Leitung (26) mit einer thermischen Schutzmanschette (36) in dem Bereich versehen ist, in dem sie die Seitenwand des Reaktorbehälters (10) durchquert.

jecting pressurized water coming from an emergency reservoir, opening into the vessel at a level at least equal to that of the pipes; internal equipments suspended from the vessel, having a plate (16) supporting the core (20) and forming with the side wall of the vessel (10) an annular downward water flow passage from the inlet pipe or each inlet pipe as far as a distribution space (18) situated below the core support plate (16); and a duct (28,28a) extending the conduit or each conduit (26) downwards,

characterized in that the duct or each duct (28,28a) is located between a casing (14) belonging to the internal equipments and the side wall of the vessel, at a distance from the latter, thermally insulated from the side wall of the vessel (10), at least at the level of the core (20) and opens, below the core support plate (16), into the distribution space (18), the duct being continuous from the injection conduit up to the distribution space.

2. Reactor according to claim 1, characterized in that each duct (28) is rigidly fixed to the casing (14) and comprises substantially sealed means bearing against the outlet of the corresponding conduit (26).

3. Reactor according to claim 1, characterized in that each duct is fixed to the side wall of the vessel by means which hold it at a distance therefrom, and in that it comprises a connecting section (32) engaged in an inlet pipe of the corresponding conduit (26).

4. Reactor according to claim 3, characterized in that each duct is fixed to the vessel by supports (38) situated at a level different from that of the core (20).

5. Reactor according to any one of the preceding claims, characterized in that each conduit (26) is provided with a thermal protection sleeve (36) in the part where it passes through the side wall of the vessel (10).

**Claims**

1. Pressurized water nuclear reactor comprising: a vessel (10) closed by a cover (12), having inlet (22) and outlet (24) pipes for the cooling water and connected to at least one conduit (26) for in-

FIG.1.

FIG.2.

FIG.3.

EP 0 344 041 B1

FIG. 5.

FIG. 4.